# EUROPEAN PATENT APPLICATION

(11) **EP 4 734 205 A1**
(43) Date of publication of application: **29.04.2026**
(21) Application number: 24826039.0
(22) Date of filing: 24.06.2024
(51) Int. Cl.: H01M 10/052, H01M 4/38, H01M 4/58

(54) **SECONDARY BATTERY**

(30) Priority: 23.06.2023 JP 2023102918
(71) Applicant: Orlib Co., Ltd., Tokyo, 113-0033 (JP)
(72) Inventor: SATOH, Masaharu, Tokyo 113-0033 (JP)
(74) Representative: Mewburn Ellis LLP
(86) International application number: PCT/JP2024/022713
(87) International publication number: WO 2024/262638

(57) **Abstract**

To provide a secondary battery that is composed of resource-abundant materials, has high energy density, and is less likely to decrease in capacity even with charging and discharging repeated.

The above-described problem is solved by a secondary battery comprising at least a positive electrode, a negative electrode, and an electrolyte. The positive electrode is an olivine-type phosphate, the negative electrode contains silicon or a silicon compound predoped with lithium, and a ratio of a capacity per unit area of the negative electrode to a capacity per unit area of the positive electrode (an AC ratio) is 1.5 or higher.

## Description

### Field of the Invention

The present invention relates to a secondary battery. More specifically, the present invention relates to a secondary battery including, as constituent elements, at least a positive electrode, a negative electrode, and an electrolyte, the positive electrode being an olivine-type phosphate, the negative electrode containing silicon or a silicon compound predoped with lithium, and a ratio of a capacity per unit area of the negative electrode to a capacity per unit area of the positive electrode (an AC ratio) being 1.5 or higher. The secondary battery is composed of materials unproblematic in terms of resources, has high energy density and excellent stability, and is less likely to decrease in capacity even with charging and discharging repeated.

### BACKGROUND ART

With the expansion of markets for mobile electronic devices, electric vehicles, and the like, high energy density is demanded for batteries used in these devices. To date, with alkali metal ions such as lithium used as charge carriers, secondary batteries that utilize electrochemical reactions associated with a charge transfer thereof have been developed. In particular, lithium-ion secondary batteries have high energy density and thus are widely used.

In lithium-ion secondary batteries, lithium-containing transition metal oxides are used as a positive electrode active material, and graphite is used as a negative electrode active material. Charging and discharging are performed through insertion reactions and elimination reactions of lithium ions with respect to these positive and negative electrode active materials. In such lithium-ion secondary batteries, the development of new technologies that realize even higher energy density is demanded. In response to such demands, increasing capacity per unit area of the negative electrode, reducing irreversible capacity, and the like are being studied. For example, Patent Document 1 discloses a secondary battery composed of a negative electrode that includes silicon or a silicon compound capable of reacting with many electrons and having a theoretical capacity equal to or greater than twice that of graphite as a lithium occluding layer. Patent Document 2 discloses a secondary battery in which the irreversible capacity is reduced by electrochemically predoping a silicon-based electrode layer with lithium under pressure.

Incidentally, cobalt, nickel, manganese, and other lithium-containing transition metal oxides that constitute a positive electrode of a lithium-ion battery have limited reserves as resources, and are problematic in that, as usage thereof increases, a material cost also rises. Therefore, lithium iron phosphate has been attracting attention as a positive electrode active material that does not use these rare metals (Patent Document 2). This compound contains iron, a basic metal, as a raw material, and thus is abundant in resources, and has a capacity per unit area of 140 to 170 Ah/kg, as an electrode active material, which is equivalent to that of lithium cobaltate. However, a discharge voltage thereof plateaus at 2.8 V, which is 70% of that of lithium cobaltate, and thus the energy density thereof also plateaus at about 70%.

### PRIOR ART DOCUMENTSPatent Documents[0005]

Patent Document 1: Japanese Laid-Open Patent Application Publication No. 2004-87251Patent Document 2: Japanese Patent No. 7170330Patent Document 3: Japanese Laid-Open Patent Application Publication No. 2002-110162

### SUMMARY OF THE INVENTION

### Problems to be Solved by the Invention[0006]

In the above-described Patent Document 1, high-capacity silicon is used as the active material, but the irreversible capacity thereof is larger than that of graphite, and volume changes associated with charging and discharging are significant, resulting in the problem of an inadequate capacity and an inadequate charge-discharge cycle life. Further, in Patent Document 2, a silicon negative electrode is electrochemically predoped, thereby compensating for capacity lost as irreversible capacity and forming a stable passivation layer to improve the charge-discharge cycle life, but rare metals such as cobalt and nickel that have limited reserves as resources must be continually used.

Thus, the problem exists that a secondary battery composed of resource-abundant materials and having high energy density and an improved charge-discharge cycle life has not yet been discovered.

The present invention has been made to solve the above-described problems, and an object thereof is to provide a secondary battery that is composed of resource-abundant materials, has high energy density, and is less likely to decrease in capacity even with charging and discharging repeated.

### Means for Solving the Problems

A secondary battery according to the present invention comprises, as constituent elements, at least a positive electrode, a negative electrode, and an electrolyte. A positive electrode active material constituting the positive electrode is an olivine-type phosphate, the negative electrode contains silicon or a silicon compound predoped with lithium, and a ratio of a capacity per unit area of the negative electrode to a capacity per unit area of the positive electrode (an AC ratio) is 1.5 or higher.

### Effect of the Invention

According to the present invention, in a secondary battery including, as constituent elements, at least a positive electrode, a negative electrode, and an electrolyte, the positive electrode is an olivine-type phosphate, thereby making it possible to obtain an active material that does not use materials, such as cobalt or nickel, having limited reserves as resources. Further, the negative electrode contains silicon or a silicon compound predoped with lithium, resulting in no irreversible capacity and an increase in the energy density of the battery as a whole. Furthermore, the AC ratio is 1.5 or higher, making it possible to achieve a battery having a minimal capacity decrease and excellent stability even with charging and discharging repeated.

The present invention is implemented, making it possible to realize a battery that, without using materials, such as cobalt or nickel, having limited reserves as resources, has an energy density comparable to that of batteries that use such materials, a long charge-discharge cycle life, and excellent stability.

### BRIEF DESCRIPTION OF THE DRAWINGS[0012]

Fig. 1 is a sectional view illustrating an example of a secondary battery according to the present invention.
Fig. 2 is a graph showing changes in voltage during repeated charge-discharge processes (1 to 10 cycles) of the secondary battery prepared in Example 1.

### Embodiments of the Invention[0013]

Hereinafter, a mode for carrying out the present invention will be described with reference to the drawings. However, the technical scope of the present invention should be defined on the basis of the description of the claims and is not restricted only to the following mode.

### [Secondary Battery]

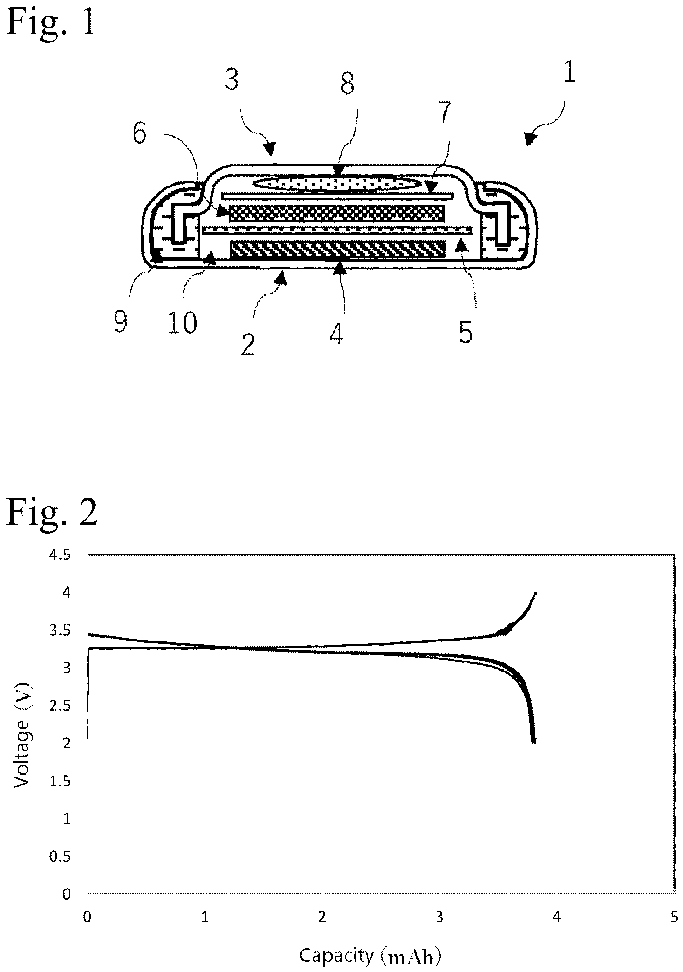

A secondary battery according to the present invention includes at least a positive electrode, a negative electrode, and an electrolyte. The positive electrode is an olivine-type phosphate, the negative electrode contains silicon or a silicon compound predoped with lithium, and a ratio of a capacity per unit area of the negative electrode to a capacity per unit area of the positive electrode (referred to as an "AC ratio") is 1.5 or higher. A mode of the secondary battery is not particularly limited, but an example in Fig. 1 is a coin-type secondary battery. In the case of this example, the secondary battery includes a positive electrode 4, a negative electrode 6, and an electrolyte 10, and is also constituted by a positive electrode case 2, a negative electrode case 3, a gasket 9, a separator 5, and a metal spring 8.

### (Structural elements)

The positive electrode case 2 is provided as an exterior member of the positive electrode 4 and serves as a positive electrode current collector. At a bottom center of the positive electrode case 2, an electrode layer, constituted by a positive electrode active material that can be electrochemically oxidized and reduced and a conductive material, is arranged. On the positive electrode 4, the separator 5 composed of a sheet or film having porosity, such as a microporous membrane, nonwoven fabric, or woven fabric, is laminated. Further, on the separator, the negative electrode 6 is arranged. On this negative electrode 6, a negative electrode current collector 7 composed of metal is laminated. Furthermore, on the negative electrode current collector 7, the metal spring 8 is placed. Here, a coin-type secondary battery is described, but a battery shape, needless to say, is not particularly limited, and may be a cylinder-type, a prism-type, a sheet-type, and the like. In addition, an exterior packaging method is also not particularly limited, and a metal case, a molded resin, an aluminumlaminated film, or the like may be used.

In Fig. 1, the negative electrode case 3 is fixed to the positive electrode case 2 against a biasing force of the metal spring 8. In an internal space formed by the positive electrode case 2 and the negative electrode case 3 being fixed, the positive electrode 4, the separator 5, the negative electrode 6, and the negative electrode current collector 7 are laminated and placed, and this internal space is filled with the electrolyte 10. A gap between the positive electrode case 2 and the negative electrode case 3 that form the internal space is sealed via the gasket 9.

In the present invention, the AC ratio is 1.5 or higher. Typically, in a secondary battery, the positive electrode and negative electrode are used facing each other. Therefore, a capacity ratio per unit area of the electrodes facing each other affects characteristics of the battery. In the present invention, the capacity of the positive electrode and the negative electrode as a whole is not particularly limited. Further, a thickness, a density, and a basis weight of each of the positive electrode and the negative electrode are not particularly limited. In the present invention, the capacity per unit area for determining the AC ratio is a design capacity and is calculated from an amount of electrode active material and a theoretical capacity of each electrode layer. Specific examples of the theoretical capacity are, for example, 169.9 mAh/g for lithium iron phosphate and 4,199 mAh/g for silicon. As a specific calculation, the capacity per unit area is 3.06 mA/cm² for a positive electrode with an active material concentration of lithium iron phosphate of 90 wt.% and a basis weight of 20 mg/cm², and is 12.6 mA/cm² for a negative electrode with an active material concentration of silicon of 75 wt.% and a basis weight of 4 mg/cm. The AC ratio at this time is 12.6/3.06 = 4.12. In the present invention, a mixture of silicon and graphite can also be used as the negative electrode. The capacity in this case can be calculated by the respective theoretical capacities and the mixing ratio. For example, the capacity per unit area is 8.54 for a negative electrode with a mixing ratio of graphite and silicon of 9:1, an active material concentration of 94 wt.%, and a basis weight of 8 mg/cm², and the AC ratio in this case is 2.79.

### (Positive electrode and negative electrode)

In the present invention, the main electrode active material constituting the positive electrode is an olivine-type phosphate, and is used alone or in combination with other electrode active materials. Olivine-type phosphates are represented by the general formula LiMPO₄ (M = Fe, Co, Mn, and the like). In the present invention, an olivine-type lithium iron phosphate with M = Fe is particularly preferred from the standpoint of the effects of the invention, such as resource problems.

In the present invention, the positive electrode 4 can be prepared by a conventionally known method. That is, the positive electrode 4 can be prepared by mixing a positive electrode active material such as lithium iron phosphate with a conductive material and a binder and adding a solvent to prepare a slurry, coating an electrode foil serving as a current collector with the slurry by a conventionally known method, and drying the slurry.

In the present invention, the negative electrode 6 can be prepared by a conventionally known method. The electrode active material constituting the negative electrode is silicon or a silicon compound predoped with lithium. Examples of the silicon or the silicon compound include Si, SiO, SiOC, and the like. In the present invention, as in conventional methods, for example, the negative electrode can be formed by applying a process of mixing the electrode active material with a conductive material (graphite or the like) and a binder and adding a solvent to prepare a slurry, coating an electrode foil serving as a current collector with the slurry by a conventionally known method, and drying the slurry. In the present invention, the electrode foil serving as the negative electrode current collector is not particularly restricted, but copper foil and stainless steel foil are preferred from the standpoint of the effects of the invention. In the present invention, the electrode composed of the predoped silicon or silicon compound may be one coated with the silicon or the silicon compound predoped in advance, or one coated with the silicon or the silicon compound predoped after the coating.

In the present invention, the silicon or the silicon compound predoped with lithium is not particularly limited as long as the silicon or the silicon compound is predoped with lithium, but preferably is silicon or a silicon compound predoped with lithium in an amount of 0.02 mol or greater per mole of the silicon or the silicon compound from the standpoint of the effects of the invention. In a case in which the silicon is predoped by electrolytic predoping, 0.02 mol per mole of the active material corresponds to 19.1 Ah/kg, and therefore predoping at an amount of 0.02 mol or greater is preferably performed. In the present invention, predoping is performed, making it possible to decrease the irreversible capacity and compensate for the loss in lithium in the repetition of charging and discharging, and thus obtain a secondary battery having high energy and long life.

In the present invention, the conductive materials used for preparing the positive electrode and the negative electrode are not particularly limited, and examples include carbonaceous particulates such as carbon black, Ketjen black, and acetylene black; carbonaceous fibers such as vapor-grown carbon fibers, carbon nanotubes, and carbon nanohorns; carbonaceous sheets such as graphene; and the like. These conductive materials can be used in combination of two or more types as necessary. Further, the solvent is also not particularly limited, and examples include aprotic solvents such as N-methylpyrrolidone, dimethyl sulfoxide, dimethylformamide, propylene carbonate, diethyl carbonate, dimethyl carbonate, γ-butyrolactone, acetonitrile, tetrahydrofuran, nitrobenzene, and acetone, as well as methanol, ethanol, water, and the like. The binder is not particularly limited as long as the binder can bind the electrode active material and the conductive material, and examples include various resins such as polyethylene, polyvinylidene fluoride, polyhexafluoropropylene, polytetrafluoroethylene, polyethylene oxide, carboxymethyl cellulose, styrene-butadiene rubber, polyacrylic acid, and polyimide resin.

According to research by the present inventors, in a case in which negative electrode active materials such as graphite or silicon are used, when the AC ratio exceeds 1 in the case of charging, a proportion of irreversible capacity increases and the capacity as a battery decreases. Further, when the AC ratio is 1 or less, lithium precipitates on the electrode during charging. Therefore, the AC ratio is typically used within a range of about 1 to 1.05. In the present invention, it is found that the irreversible capacity is decreased by predoping the silicon or the silicon compound and, as long as the AC ratio is 1.5 or higher at that time, the capacity decrease associated with the repetition of charging and discharging lessens, leading to the present invention.

### (Electrolyte)

In the present invention, the electrolyte 10 is interposed between the positive electrode 4 and the negative electrode 6 to transport charge carriers between both electrodes, is not particularly limited as long as the electrolyte has ionic conductivity, and may have a liquid form, a gel form, or a solid form having ion conductivity of 10⁻⁶ S/cm or higher at room temperature. In the present invention, an electrolyte in liquid form, gel form, or the like is preferably used as the electrolyte due to ease of reaction. In the case of the liquid form, the electrolyte 10 is an organic solvent containing an electrolyte salt. Examples of the electrolyte salt include LiPF₆, LiClO₄, LiBF₄, LiCF₃SO₃, LiN(CF₃SO₂)₂, LiN(C₂F₅SO₂)₂, LiC(CF₃SO₃)₃, LiC(C₂F₅SO₂)₃, and the like, and examples of the organic solvent include ethylene carbonate, propylene carbonate, dimethyl carbonate, diethyl carbonate, methyl ethyl carbonate, γ-butyrolactone, tetrahydrofuran, dioxolane, dimethyl sulfone, ethyl methyl sulfone, diethyl sulfone, propyl methyl sulfone, isopropyl methyl sulfone, propyl ethyl sulfone, isopropyl ethyl sulfone, dipropyl sulfone, diisopropyl sulfone, sulfolane, pentamethylene sulfone, hexamethylene sulfone, 3-methyl sulfolane, 2,4-dimethyl sulfolane, N,N-dimethylformamide, dimethylacetamide, N-methyl-2-pyrrolidone, and the like, as well as mixed solvents thereof.

In the present invention, a concentration of the electrolyte salt is not particularly limited, but can be selected as desired within a range of 0.1 mol/L to 2.5 mol/L, and general concentrations such as 1 mol/L may be used. Further, electrolyte additives such as fluoroethylene carbonate, vinylene carbonate, hydrofluoroether, and biphenyl may be added to the electrolyte.

For the electrolyte 10, a gel electrolyte obtained by incorporating a solvent into a polymer compound to form a gel, an ionic liquid, a symmetric glycol diether such as glyme, a chain sulfone, and the like may be used. Examples of polymer compounds include vinylidene fluoride-based polymers such as polyvinylidene fluoride, vinylidene fluoridetetrafluoroethylene copolymer, and vinylidene fluoride-hexafluoropropylenetetrafluoroethylene terpolymer; acrylonitrile-based polymers such as acrylonitrile-methyl methacrylate copolymer; polyethylene oxide, ethylene oxide-propylene oxide copolymer, acrylate and methacrylate polymers thereof, and the like containing electrolytic solutions; and the like.

### [Manufacturing Method of Secondary Battery]

A manufacturing method of a secondary battery according to the present invention is a method of manufacturing a secondary battery 1 mentioned above, and is a manufacturing method of a secondary battery including at least the positive electrode 4, the negative electrode 6, and the electrolyte 10. The secondary battery 1 manufactured by this method has an AC ratio of 1.5 or higher, and thus has the characteristic of a capacity decrease associated with the repetition of charging and discharging being minimal.

A manufacturing method of a general lithium-ion secondary battery is constituted by an electrode forming process, an electrode and separator laminating process, an electrolytic solution injecting and impregnating process, an electrode lead-out process, an exterior packaging process, and the like. In the present invention, other than the silicon or the silicon compound being used for the negative electrode, and predoping being performed to set the AC ratio described above under certain conditions, the manufacturing method of a general lithium-ion secondary battery can be utilized.

It should be noted that the technical scope of the present invention is not limited to the above-described embodiment, and various modifications can be made without departing from the spirit of the present invention.

### Examples

Hereinafter, the present invention will be described in more detail with reference to examples and comparative examples.

### [Example 1]

### (Preparation of secondary battery)

A negative electrode ink for coating was prepared by weighing 7.5 g of silicon powder, 1.5 g of acetylene black, and 7.7 g of a 13 wt.% aqueous solution of polyacrylonitrile copolymer having an average molecular weight of 2,300,000, and further adding purified water to adjust the viscosity. This ink was coated on a copper foil having a width of 130 mm and a thickness of 12 µm by using a knife roll coater at a coating thickness of 30 µm, and dried at 80°C. Subsequently, roll pressing was performed, thereby forming a negative electrode active material layer having a thickness of 20 µm on the copper foil serving as the current collector to obtain a negative electrode composed of silicon as the active material. The capacity per unit area of this negative electrode was 8.8 mAh/cm².

The obtained negative electrode was cut to 20 mm in length and 50 mm in width, and a tab for electrode lead-out was welded to an uncoated portion. Next, in a dry room having a dew point of -45°C or lower, a nonwoven fabric having a thickness of 100 µm was laminated, and an electrolytic solution composed of a mixed solution of 10-vol% fluoroethylene carbonate, 27-vol% ethylene carbonate, and 63-vol% diethyl carbonate containing 1M LiPF₅ was dripped to further laminate a Li-foil-bonded copper foil (Li-foil thickness: 30 µm) cut to 25 mm in length and 55 mm in width. An insulation-treated stainless steel plate was stacked on an outer side of the electrode and the Li-foil-bonded copper foil thus prepared, and a pressure of 0.01 MPa was applied to the stainless steel plate on both surfaces. Under pressure, a constant current electrolytic reaction was performed on the negative electrodes at a current of 0.37 mA to a voltage of 0.01 V. After reaction completion, the negative electrode that turned black was removed, washed with dimethyl carbonate, and air-dried in a dry room to obtain a negative electrode composed of silicon predoped with lithium. The predoping amount determined from a current amount flowing during predoping was 0.1 mol per mole of silicon.

Next, a mixture was obtained by weighing out an N-methylpyrrolidone (NMP) solution containing 9.0 g of lithium iron phosphate, 0.5 g of acetylene black, and 0.5 g of polyvinylidene fluoride (PVDF), adding the NMP thereto, and kneading. The NMP was further added to this mixture to adjust the viscosity and prepare a positive electrode slurry for coating. This positive electrode slurry was coated on an aluminum foil having a width of 130 mm and a thickness of 12 µm by using a knife roll coater at a coating thickness of 60 µm, and dried at 120°C to obtain a single-side coated electrode. Subsequently, a back surface was also coated by using a positive electrode slurry of the same composition at a coating thickness of 60 µm to obtain a double-side coated foil. Next, the obtained double-side coated electrode was roll-pressed and a positive electrode active material layer having a thickness of 50 µm on both surfaces of the aluminum foil serving as the current collector was formed to obtain a positive electrode composed of lithium iron phosphate as the positive electrode active material. The capacity per unit area of this positive electrode was 3.4 mAh/cm².

The positive electrode prepared as described above was punched out to a diameter of 13 mm, and placed on a positive electrode case of a coin-type battery, and a polyolefinic separator film was laminated thereon. Furthermore, a negative electrode that is composed of the silicon predoped with lithium and is punched out to a diameter of 14 mm was laminated to impregnate an electrolytic solution composed of a mixed solution of 10-vol% fluoroethylene carbonate, 27-vol% ethylene carbonate, and 63-vol% diethyl carbonate containing 1M LiPF₆. Next, as illustrated in Fig. 1, the negative electrode 6 and the metal spring 8 were placed, a negative electrode side member with a peripheral edge thereof covered by the gasket 9 was stacked, and external sealing was performed by using a caulking machine. Thus, the sealed coin-type secondary battery 1 using resource-abundant materials composed of lithium iron phosphate as the positive electrode active material and silicon predoped with lithium as the negative electrode active material was prepared. The AC ratio of this secondary battery was 2.6.

### (Operation verification of secondary battery)

The prepared secondary battery was charged at a constant current of 0.5 mA until the voltage reached 4.2 V, and then discharged at a constant current of 0.5 mA until the voltage reached 2.0 V. As a result, it was confirmed that this cell was a secondary battery having a discharge capacity of 3.8 mAh. Subsequently, when charging and discharging were repeated within a range of 2.0 to 4.2 V, the capacity per unit area was 90% or more of the initial value even after 100 cycles, confirming that the cell was a secondary battery having a minimal capacity decrease and a long cycle life even with charging and discharging repeated.

### [Comparative Example 1]

### (Preparation of secondary batteries)

The negative electrode ink for coating of Example 1 was coated on copper foils having a width of 130 mm and a thickness of 12 µm by using a knife roll coater as in Example 1, except that the coating thicknesses were 15 µm and 12 µm instead of 30 µm, and dried at 80°C. Subsequently, roll pressing was performed, thereby forming negative electrode active material layers having a thickness of 10 µm and a thickness of 8 µm on the copper foils serving as the current collectors to obtain negative electrodes composed of silicon as the active material. The capacity densities of these negative electrodes were 4.4 mAh/cm² and 3.5 mAh/cm², respectively.

The obtained negative electrodes were cut to 20 mm in length and 50 mm in width as in Example 1, and tabs for electrode lead-out were welded to uncoated portions. Next, in a dry room having a dew point of -45°C or lower, nonwoven fabric was laminated by a method similar to that in Example 1, and electrolytic solutions were dripped to further laminate lithium-foil-bonded copper foil (Li-foil thickness: 30 µm). Insulation-treated stainless steel plates were stacked on outer sides of the electrodes and the Li-foil-bonded copper foil thus prepared, and a pressure of 0.01 MPa was applied to the stainless steel plates on both surfaces. Under pressure, a constant current electrolytic reaction was performed on the negative electrodes at a current of 0.37 mA to a voltage of 0.01 V. After reaction completion, the negative electrodes that turned black were removed, washed with dimethyl carbonate, and air-dried in a dry room to obtain negative electrodes composed of silicon predoped with lithium. The predoping amount determined from a current amount flowing during predoping was 0.1 mol per mole of silicon.

As described above, sealed coin-type secondary batteries using resource-abundant materials composed of lithium iron phosphate as the positive electrode active material and silicon predoped with lithium as the negative electrode active material were prepared by a method similar to that in Example 1, except that coating thicknesses were different and negative electrodes composed of the predoped silicon were used. The AC ratios of these secondary batteries were 1.29 and 1.03, respectively.

### (Operation verification of secondary batteries)

The prepared secondary batteries were charged and discharged by the method in Example 1. As a result, it was confirmed that both of these cells were secondary batteries having a capacity of 3.8 mAh (Fig. 2). Subsequently, when charging and discharging were repeated within a range of 2.0 to 4.2 V, the capacity densities were 80% or less of the initial value after 100 cycles, confirming that the cells were secondary batteries that decreased in capacity with charging and discharging repeated.

### [Comparative Example 2]

### (Preparation of secondary battery)

A sealed coin-type secondary battery composed of lithium iron phosphate as the positive electrode active material and non-predoped silicon as the negative electrode active material was prepared by laminating the positive electrode and a separator film and impregnating the electrolytic solution by a method similar to that in Example 1, except that a negative electrode composed of silicon as the active material was used as is without predoping instead of the negative electrode composed of the silicon predoped with lithium of Example 1. The AC ratio of this battery was 2.98.

### (Operation verification of secondary battery)

The prepared secondary battery was charged and discharged by the method in Example 1. As a result, it was confirmed that this cell was a secondary battery having a capacity of 3.0 mAh, which was 20% lower than the capacity expected from the basis weight of the positive electrode. Subsequently, when charging and discharging were repeated within a range of 2.0 to 4.2 V, the capacity per unit area was 80% or less of the initial value after 100 cycles, confirming that the cell was a secondary battery that decreased in capacity with charging and discharging repeated.

### [Example 2]

### (Preparation of secondary battery)

A negative electrode ink for coating was prepared by weighing 1.8 g of silicon powder, 7.2 g of artificial graphite, 1.0 g of acetylene black, and KF Polymer L #1100 manufactured by Kureha Corporation, and further adding the NMP to adjust the viscosity. This ink was coated on a copper foil having a width of 130 mm and a thickness of 12 µm using a knife roll coater at a coating thickness of 60 µm, and dried at 80°C. Subsequently, roll pressing was performed, thereby forming a negative electrode active material layer having a thickness of 40 µm on the copper foil serving as the current collector to obtain a negative electrode composed of silicon and artificial graphite as the active material. The capacity per unit area of this negative electrode was 7.2 mAh/cm².

The obtained negative electrode was cut out by the method in Example 1, a tab for electrode lead-out was welded by a method similar to that in Example 1, and an electrolytic solution was dripped to laminate a Li-foil-bonded copper foil (Li-foil thickness: 30 µm). Next, a constant current electrolysis reaction was performed by a method similar to that in Example 1. After reaction completion, the negative electrode that turned gold was removed, washed with dimethyl carbonate, and air-dried in a dry room to obtain a negative electrode composed of artificial graphite and silicon predoped with lithium. The predoping amount determined from a current amount flowing during predoping was 0.2 mol per mole of silicon.

A sealed coin-type secondary battery using resource-abundant materials composed of lithium iron phosphate as the positive electrode active material and artificial graphite and silicon predoped with lithium as the negative electrode active material was prepared by a method similar to that in Example 1, except that a negative electrode composed of artificial graphite and silicon predoped with lithium was used instead of the negative electrode composed of the silicon predoped with lithium as described above. The AC ratio of this secondary battery was 2.12.

### (Operation verification of secondary battery)

The prepared secondary battery was charged at a constant current of 0.6 mA until the voltage reached 4.2 V, and then discharged at a constant current of 0.6 mA until the voltage reached 2.0 V. As a result, it was confirmed that this cell was a secondary battery having a discharge capacity of 3.7 mAh. Subsequently, when charging and discharging were repeated within a range of 2.0 to 4.2 V, the capacity per unit area was 90% or more of the initial value even after 100 cycles, confirming that the cell was a secondary battery having a minimal capacity decrease and a long cycle life even with charging and discharging repeated.

### Descriptions of Reference Numerals

- 1: Secondary battery
- 2: Positive electrode case
- 3: Negative electrode case
- 4: Positive electrode
- 5: Separator
- 6: Negative electrode
- 7: Negative electrode current collector
- 8: Metal spring
- 9: Gasket
- 10: Electrolyte

## Claims

1. A secondary battery comprising, as constituent elements, at least:
a positive electrode;
a negative electrode; and
an electrolyte,
the positive electrode being an olivine-type phosphate, the negative electrode containing silicon or a silicon compound predoped with lithium, and a ratio of a capacity per unit area of the negative electrode to a capacity per unit area of the positive electrode (an AC ratio) being 1.5 or higher.

2. The secondary battery according to claim 1, wherein
the olivine-type phosphate is an olivine-type lithium iron phosphate.

3. The secondary battery according to claim 1 or 2, wherein
the silicon or the silicon compound predoped with lithium is predoped with lithium in an amount of 0.02 mol or greater per mole of the silicon or the silicon compound.

4. The secondary battery according to claim 1 or 2, wherein
the silicon or the silicon compound predoped with lithium is silicon.
